# EUROPEAN PATENT APPLICATION

(11) **EP 4 480 872 A1**
(43) Date of publication of application: **25.12.2024**
(21) Application number: 23923061.8
(22) Date of filing: 08.12.2023
(51) Int. Cl.: B65G 65/32, B65G 69/00, B65B 69/00

(54) **RAW MATERIAL INPUT AUTOMATION DEVICE**

(30) Priority: 16.02.2023 KR 20230020557; 19.07.2023 KR 20230093821
(71) Applicant: LG Energy Solution, Ltd., Seoul 07335 (KR)
(72) Inventor: JEONG, Byeong Oh, Daejeon 34122 (KR)
(74) Representative: Plasseraud IP
(86) International application number: PCT/KR2023/020220
(87) International publication number: WO 2024/172262

(57) **Abstract**

A raw material input automation device includes a hopper configured to receive raw materials stored inside a bag; a cutter disposed above an inlet of the hopper and configured to cut a lower part of the bag; a box disposed above the hopper and configured to prevent external diffusion of dust; a guide disposed above the box and configured to guide entry of the bag; and at least one pusher installed on the guide and configured to tap the bag by variable tilting to promote a discharge of the raw materials from the bag into the hopper.

## Description

### Cross-Reference to Related Applications

The present application is a national phase entry under 35 U.S.C. § 371 of International Application No. PCT/KR2023/020220 filed December 8, 2023, which claims priority from Korean Patent Application No. 10-2023-0020557 filed February 16, 2023 and Korean Patent Application No. 10-2023-0093821 filed July 19, 2023, all of which are incorporated herein by reference.

### Technical Field

The present disclosure relates to a raw material input automation device.

### Background Art

A packaging bag (container bag) is a type of packaging container storing raw materials such as battery electrode active materials (active electrode materials). Such a packaging bag may be a flexible container bag that is flexible and deformable, where the flexible container bag is also abbreviated as a flecon bag.

Conventionally, a worker disjoints a discharge part of the flecon bag while visually viewing it, and then mounts it on a hopper, and continuously discharges raw materials (active electrode materials, etc.) while shaking the bag or hitting it with a hammer to resolve their clumping when the discharge is not smooth due to an occurrence of clumping. As such, conventionally, the worker manually disjoints a lower part of the bag, mounts it on the hopper, and then input raw materials.

In this regard, a way that the raw materials (active materials, etc.) inside the flecon bag can be discharged without disjointing the discharge part of the flecon bag, and a way that when the raw materials (active materials, etc.) inside the flecon bag clump together and thus the discharge is not smooth, the discharge can be continuously made without human intervention are needed.

### Brief Summary

### Technical Problem

Therefore, it is an object of the present disclosure to provide a device automatically putting raw materials into a hopper without worker interventions.

### Technical Solution

In order to achieve the above-described object, the present disclosure provides a raw material input automation device comprising: a hopper configured to receive raw materials stored inside a bag; a cutter disposed above an inlet of the hopper and configured to cut a lower part of the bag; a box disposed above the hopper and configured to prevent external diffusion of dust; a guide disposed above the box and configured to guide entry of the bag; and at least one pusher installed on the guide and configured to tap the bag by variable tilting to promote a discharge of the raw materials from the bag into the hopper.

In the present disclosure, the cutter may be configured to be raised or lowered by an air cylinder.

In the present disclosure, the cutter may include a pyramid-shaped knife and a mesh disposed below the pyramid-shaped knife to filter foreign substances.

In the present disclosure, an upper part of the box may be sealed with the guide, and a lower part of the box may be sealed with the inlet of the hopper.

In the present disclosure, the box may be transparent and have a sealed structure.

In the present disclosure, the box may be a glove box mounted with a glove.

In the present disclosure, the box may include a main box equipped with a glove and a door for discharging scrap; and a scrap box disposed on a side of the main box.

In the present disclosure, the guide may have a tapered structure whose width narrows downward, and wherein an inclination angle and a size of the guide may be set such that sides of the bag contact an inner surface of the guide first.

In the present disclosure, the at least one pusher may include a pair of pushers, each of the pair of pushers including a cylinder disposed outside the guide, a rod installed on the cylinder to be movable forward and backward along a horizontal direction, a link connected to the rod, and a tilting member that is connected to the link, the tilting member being disposed inside the guide and variably tiltable by a forward movement and a backward movement of the link, with a lower end of the tilting member being fixed to the guide to be rotated.

The raw material input automation device according to the present disclosure may further comprise a rail disposed at a height in a horizontal direction; and a hanger mounted on the rail and configured to reciprocate in the horizontal direction, the hanger configured to reciprocate the bag mounted at a lower end of the hanger in a vertical direction.

In the present disclosure, the hanger may include an upper hanger mounted on the rail, a lower hanger disposed below the upper hanger, a wire installed between the upper hanger and the lower hanger, and at least one hook mounted on the lower hanger to hang the bag.

In the present disclosure, a location hole may be positioned on any one of the upper hanger and the lower hanger, and a location pin inserted into the location hole may be positioned on the other one of the upper hanger and the lower hanger that does not include the location hole.

In the present disclosure, the at least one hook may include a pair of hooks, wherein the pair of hooks may be configured to grip a string-shaped sling bar of the bag at two points, and wherein the pair of hooks may have a gap so as to minimize a height of the bag.

In the present disclosure, the hanger may further comprise load cells installed on both left and right sides of the lower hanger.

In the present disclosure, the hanger may be configured to correct a tilt of the bag by sensing a weight deviation on the load cells on both left and right sides of the lower hanger, the hanger being configured to adjust the height of the bag based on a weight change sensed by the load cells on both left and right sides of the lower hanger.

### Advantageous Effects

The raw material input automation device according to the present disclosure can reduce work man-hours by automatically inputting raw materials into the hopper. In addition, it is possible to reduce risks of safety accidents caused by worker handling of mixer active materials, which are high-load (for example, 1 ton) hazardous substances.

### Description of Drawings

Figures 1 and 2 show an upper part and a lower part of a raw material input automation device according to the present disclosure, respectively.
Figures 3 and 4 show a variable tilting pusher according to the present disclosure.
Figure 5 shows a cutter according to the present disclosure.
Figure 6 shows a glove box according to the present disclosure.
Figures 7 to 14 show operation processes of a raw material input automation device according to the present disclosure.

### Detailed Description

Hereinafter, the present disclosure will be described in detail with reference to the accompanying drawings.

The present disclosure relates to a device automatically inputting raw materials stored in a bag (10) into a hopper (80), where the bag (10) may be, as a large bag storing raw materials, for example, a flexible container bag (flecon bag), which is flexible and deformable. At least one or more string-shaped sling bars (11) may be equipped in an upper part of the bag (10) to be hung on a hook (34) of a hanger (30), and a raw material discharge part, which is openable and closable, may be equipped in a lower part of the bag (10). The bag (10) may be composed of an outer packaging material and an inner packaging material. The raw material is not particularly limited, which may be, for example, a mixer process active material (active substance), or the like, and specifically, may be an active material of a battery electrode (negative electrode, positive electrode), or the like. The raw materials may be stored in the bag (10) in the form of powder (pulverulent body) or particles.

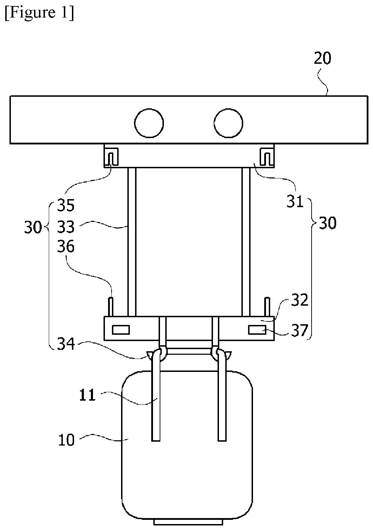

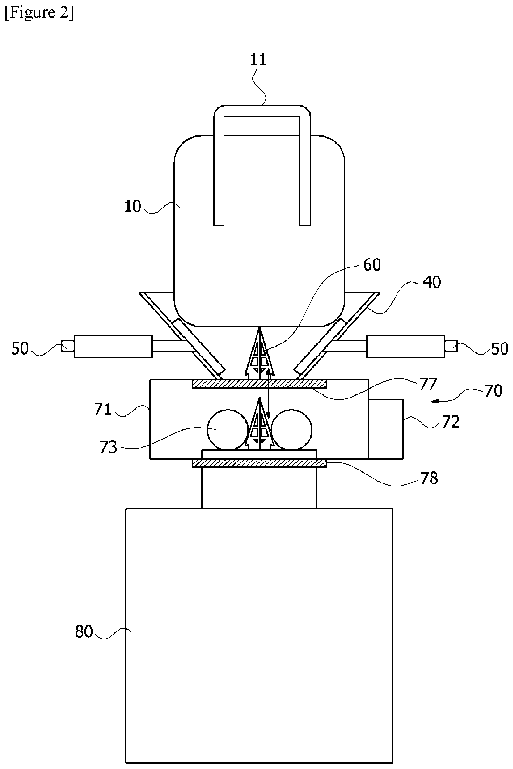

Figure 1 shows an upper side of a raw material input automation device according to the present disclosure, and Figure 2 shows a lower side of a raw material input automation device according to the present disclosure, where referring to Figures 1 and 2, and the like, the raw material input automation device according to the present disclosure may be composed of a rail (20), a hanger (30), a guide (40), a pusher (50), a cutter (60), a box (70), a hopper (80), and the like.

The rail (20) is for movement of the hanger (30), which may be disposed on a certain height (for example, 3 to 10 m) in the horizontal direction to implement OHT (overhead hoist transfer). The rail (20) may be fixed or supported through an appropriate fixing means or supporting means on the ceiling or floor, and the like. The shape and size of the rail (20), and the like are not particularly limited, which may be set appropriately.

The hanger (30) (also called carrier) is for movement of the bag (10), which is mounted on the rail (20) to be capable of reciprocating in the horizontal direction along the rail (20), and enables to reciprocate the bag (10) mounted on the lower end in the vertical direction.

The horizontal reciprocation and vertical reciprocation of the hanger (30) are possible by a typical mechanism (pulley and belt, gear and chain, cylinder and piston, rack and pinion, reel and wire, etc.) that converts rotational movement of the motor into linear movement, which may be appropriately selected from the foregoing as needed.

The hanger (30) may be composed of an upper hanger (31), a lower hanger (32), a wire (33), a hook (34), a location hole (35), a location pin (36), a load cell (37), and the like.

The upper hanger (31) may be mounted on a lower part of the rail (20) and may be configured in a plate shape (polygonal plate such as square plate, circular plate, oval plate, etc.). The lower hanger (32) may be disposed below the upper hanger (31) and may be configured in the same plate shape as the shape of the upper hanger (31).

The wire (33) may be installed between the upper hanger (31) and the lower hanger (32) to connect them. The upper end of the wire (33) may be fixed to a roller or reel, and the like installed on the upper hanger (31) or the rail (20), and the like, and the lower end of the wire (33) may be fixed to the lower hanger (32). The wire (33) can be wound and unwound through a roller or reel, and the like, thereby reciprocating the lower hanger (32) in the vertical direction.

The hook (34) is mounted on the lower hanger (32) and is configured in a ring shape, thereby being capable of hanging the bag (10). The hook (34) may consist of at least one pair (preferably, two pairs or more), where the pair of hooks (34) may grip a string-shaped sling bar (11) of the bag (10) at two points, but may have a gap so that it minimizes the height of the bag (10) and sling bar (11) (wide double hook applied).

When the hook (34) is at its highest height, that is, when the lower hanger (32) is raised to be in close contact with the upper hanger (31), the height between the upper end of the rail (20) and the lower end of the hook (34) may be, for example, at most 1.2 m. The height of the bag (10), including the sling bar (11) hung on the hook (34), may be, for example, 1.8 m. The height of a manual space between the lower end of the bag (10) and the upper end of the hopper (80) may be, for example, 0.5 m. The height between the lower end of the hook (34) located at the highest height and the upper end of the hopper (80) may be, for example, at most 2.3 m. In this way, the floor height may be insufficient, so that a solution to the insufficient floor height is needed.

To solve the problem of insufficient floor height, the height of the bag (10) may be minimized by maximizing the two-point grip distance for each sling bar. Upon one-point grip of the sling bar (11), the sling bar (11) hangs loosely on the hook (34) and thus the height of the sling bar (11) is added, thereby increasing the height of the bag (10). Upon the two-point grip of the sling bar (11), the height of the bag (10) decreases while the height of the sling bar (11) decreases. Particularly, by maximizing the distance (gap) between the pair of hooks (34), which corresponds to the grip distance upon the two-point grip, it is possible to minimize the height of the bag (10), and in this case, it can be made that the upper end of the bag (10) is in close contact with or almost in close contact with the hook (34).

In addition, the insufficient floor height may be solved by compacting the traveling rail (20) and the hanger (30). Specifically, upon docking of the upper hanger (31) and the lower hanger (32), the hook (34) is positioned at the highest height, where it is preferable that the height between the upper end of the rail (20) and the lower end of the hook (34) is designed to be at most 1.2 m.

The location hole (35) may be formed on any one side of the upper hanger (31) and the lower hanger (32), and the location pin (36) inserted into the location hole (35) may be formed on the other side. In Figure 1, the location hole (35) is formed on the upper hanger (31) and the location pin (36) is formed on the lower hanger (32), but the opposite case is also possible. The location hole (35) may be formed in the form of a groove or hole on the lower surface of the upper hanger (31), and the location pin (36) may be formed in the form of a protrusion on the upper surface of the lower hanger (32).

At least one pair of location holes (35) may be formed on both sides of the upper hanger (31), and similarly, at least one pair of location pins (36) may also be formed on both sides of the lower hanger (32). The location hole (35) and the location pin (36) may have shapes and sizes that correspond to each other. As the bag (10) moves upward along the lower hanger (32) and the hook (34), the location hole (35) and the location pin (36) may be docked while the upper hanger (31) and lower hanger (32) come into close contact.

Upon left-right movement of the bag (10), there may be a problem that the bag (10) shakes in left and right directions, where through the docking of the location holes (35) and location pins (36), and the two-point grip of the sling bar (11), it is possible to solve or minimize the problem of left and right shaking of the bag (10) upon the left-right movement of the bag (10).

The hanger (30) may further comprise a scissor frame which is not shown. The scissor frame is installed between the upper hanger (31) and the lower hanger (32), and is capable of expansion and contraction (deformation) in the vertical (height) direction. The upper end of the scissor frame may be fixed to the upper hanger (31), and the lower end of the scissor frame may be fixed to the lower hanger (32). Upon lowering the bag (10), the height of the scissor frame may increase, and upon raising the bag (10), the height of the scissor frame may decrease. The scissor frame may simply be passively stretched by active movement of the wires (33).

Even when the bag (10) moves up and down, there may be a problem that the bag (10) shakes left and right. By applying the scissor frame between the upper hanger (31) and the lower hanger (32), it is possible to solve or minimize the problem of left and right shaking of the bag (10) upon the up-and-down movement of the bag (10).

Upon inputting the active material, the bag (10) may be tilted to one side. In addition, the length of the bag (10) may increase upon inputting the active material. To solve the problems of tilt and length increase of the bag (10), load cells (37) may be installed on both left and right sides of the lower hanger (32). At least one pair of load cells (37) may be installed on both sides of the lower hanger (32), and may measure the weight in real time. By sensing the weight deviation using the load cells (37) on both left and right sides, it is possible to correct the tilt of the bag (10), and it is possible to adjust the height of the bag (10) according to the weight change sensed by the load cells (37) on both left and right sides.

For example, when the bag (10) is tilted in the lower right, it may be aligned by correcting the tilt of the bag (10), as the displacement of the right wire (33) is adjusted by sensing the weight deviation using the load cells (37). In addition, when the length of the bag (10) increases, the load cells (37) detect the weight change, and it may be corrected by offsetting the length increase of the bag (10) as the wire (33) rises.

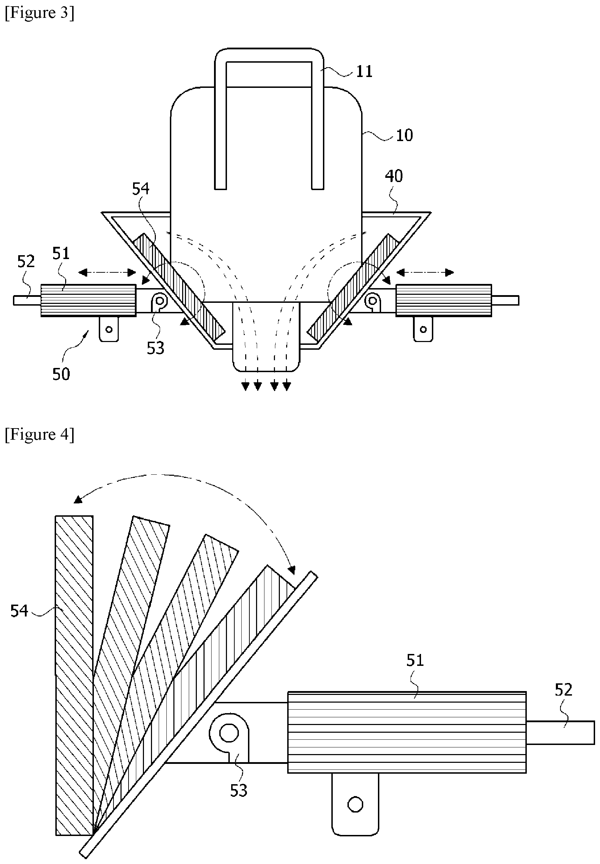

Referring to Figures 2 and 3, the guide (40) is for guiding the entry of the bag (10) when the bag (10) is lowered toward the hopper (80) by the hanger (30), which may be disposed above the box (70) and below the hanger (30), and the lower end of the guide (40) and the upper end of the box (70) may be in close contact. The guide (40) may have a tapered structure whose width narrows downward, and for example, may have an inverted truncated cone (prismoid, circular truncated cone, etc.) shape whose interior is empty. An upper part and a lower part of the guide (40) may be opened for entry of the bag (10) and the cutter (60), respectively. Preferably, the guide (40) may be configured as a quadrangular prismoid with four side surfaces, and that is, it may be a four-sided guide. The four-sided guide may allow for the discharge to be smooth by increasing the fluidity of the raw materials (pulverulent bodies) inside the bag (10).

The inclination angle and size of the guide (40) may be set so that the side surfaces of the bag (10) touch the inner surfaces of the guide (40) first. The inclination angle may mean an angle (acute angle) formed by the virtual horizontal plane and the inclined surface (side surface) of the guide (40). The inclination angle may be, for example, 20 to 70 degrees, 30 to 60 degrees, or 40 to 50 degrees. In this way, the angle and size of the guide (40) may be designed so that upon lowering and cutting the bag (10), the side surfaces of the bag (10) touch the sides of the guide (40) first, and thus the cutting is not interfered. Preferably, the inclination angle of the guide (40) may be about 45 degrees.

Referring to Figures 3 and 4, the pusher (50) is for promoting the discharge of the raw materials by tapping the bag (10), which may smoothly discharge the raw materials while resolving the clumping phenomenon of the raw materials inside the bag (10). In this way, by massaging the bag (10) with the pusher (50), the clumping of the raw materials (active materials) may be eliminated, and the discharge speed may be increased. The pusher (50) may be a variable tilting pusher tapping the bag (10) by variable tilting. The shape of the bag (10) gradually changes due to the discharge of the raw materials (pulverulent bodies), where the pusher angle of the variable tilting pusher (50) may be variably tilted depending on the changing shape of the bag (10). The pusher (50) may be composed of at least one pair, and preferably composed of two pairs, and that is, it may be four-sided variable tilting pushers installed on the four sides of the four-sided guide (40), respectively. The pusher (50) may be installed in the horizontal direction on the side surface of the guide (40). A pair of pushers (50) may be disposed symmetrically around the guide (40) on the same height, and for example, may be disposed to face each other on opposite sides at an interval of 180 degrees.

The pusher (50) may be composed of a cylinder (51), a rod (52), a link (53), a tilting member (54), and the like. The cylinder (51) may be disposed in the horizontal direction outside the guide (40), and may be an air cylinder. The rod (52) may be installed in the cylinder (51) to be movable forward and backward in the horizontal direction. The link (53) may be connected to the rod (52) to be movable forward and backward in the horizontal direction by the rod (52), and may be disposed between the guide (40) and the cylinder (51). The tilting member (54) may be connected to the link (53), may be disposed inside the guide (40), and may be variably tilted by the forward movement and backward movement of the link (53), as its lower end is rotatably fixed to the guide (40).

Upon operation of the pusher (50), the rod (52) and the link (53) may repeatedly reciprocate in the horizontal direction, and the tilting member (54) connected to the link (53) may repeatedly tap (strike) the bag (10) by variable tilting. The rod (52) and the link (53) may penetrate the guide (40) to enter the inside of the guide (40) when moving. The lower end of the tilting member (54) may be rotatably fixed to the guide (40) through its rotation axis, and as shown in Figure 4, the tilting member (54) may rotate (tilt) in an inward direction of the guide (40) from a state of close contact with the inner surface of the guide (40) around the rotation axis of the lower end. The rotation (tilting) angle of the tilting member (54) is the angle formed by the virtual horizontal plane and the tilting member (54), which may be, for example, 20 to 180 degrees, 25 to 160 degrees, 30 to 140 degrees, 35 to 120 degrees, 40 to 100 degrees, or 45 to 90 degrees.

Referring to Figure 2, the cutter (60) is for cutting the lower part of the bag (10) to discharge raw materials, wherein the cutter (60) may be disposed above an inlet of the hopper (80), and specifically, may be disposed in the guide (40) or the box (70). The cutter (60) enables to be raised and lowered (up/down) by an air cylinder, or the like, where when cutting, it may be raised and disposed in the guide (40), and after cutting, it may be lowered and disposed in the box (70). The air cylinder may be installed at an appropriate location inside and/or outside the box (70), and the like.

Specifically, after the cutter (60) is raised by the air cylinder, the raw materials may be discharged, while the bag (10) is lowered by the hanger (30) and the lower part of the bag (10) is cut by the own weight of the bag (10), and after the discharge is completed, the cutter (60) may be lowered. The raising and lowering time points of the cutter (60) are not particularly limited, and for example, it may be raised before, during, or after transfer of the bag (10) toward the hopper (80), and after the cutting, it may be lowered while the raw materials are discharged, or after the raw material discharge is completed.

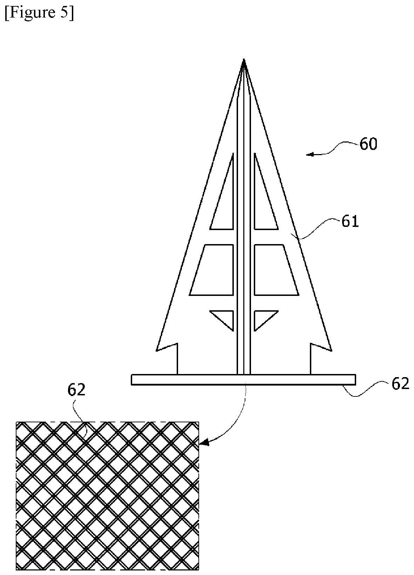

Referring to Figure 5, the cutter (60) may comprise a knife (61), and a mesh (62) disposed below the knife (61), where the knife (61) and the mesh (62) may be manufactured as one piece. The knife (61) serves to cut (dissect) the bag (10), and the mesh (62) serves to filter (leach) foreign substances generated upon cutting the bag (10) and discharging the raw materials. The material of the knife (61) may be, for example, a cemented carbide alloy. The material of the mesh (62) may be, for example, stainless steel (SUS Mesh), specifically SUS-316. Upon raising and lowering the cutter (60), only the knife (61) may be raised and lowered alone, or both the knife (61) and the mesh (62) may be raised and lowered together.

The knife (61) may have appropriate shape and size for smooth cutting of the bag (10), an appropriate cutting area, smooth discharge and passage of raw materials, and the like. For the smooth cutting, the knife (61) may have a structure in which a single sharp apex is disposed at the upper end. To this end, the knife (61) may be composed of one or more polygonal plates, for example, triangular plates (trigon), or may be composed of various pyramidal shapes, for example, quadrangular pyramids. Specifically, the knife (61) may be a pyramid knife having a pyramid shape.

According to one aspect for creating a pyramid shape, the pyramid shape may be produced by crossing two or more triangular plates in the vertical direction, and for example, as shown in Figure 5, the pyramid shape may be produced by making two triangular plates to be orthogonal to each other at an angle of 90 degrees in the vertical direction. In the case of this aspect, the overall outline appears to be a pyramid shape that is a quadrangular pyramid, but it is not a pentahedron like an actual pyramid, and may be a structure in which most of the spaces except the plates of the virtual pyramid shape are open. The knife (61) does not impede the passage of raw materials by this open structure, so that the raw materials can pass smoothly.

Referring to Figure 5, the triangular plate may be equipped with one or more holes or open regions emptied without the material on the inside, except for the corner sides, for material saving. When the holes or open regions are formed, the triangular plate may be equipped with one or more ribs, to supplement structural rigidity. The ribs may be disposed in the horizontal direction and/or vertical direction. As such, the triangular plate may be equipped with a plurality of large and small holes or open regions separated by the ribs. The lower part of the triangular plate may be equipped with a connection member extending (protruding) downward for connection to the mesh (62).

According to another aspect for creating a pyramid shape, the knife (61) may be configured as a pentahedron like an actual pyramid. Even in the case of this aspect, for smooth passage of raw materials and material savings, and the like, the interior except for each side may be an empty space, and on each side, the material is mainly disposed only at the corner sides, so that one or more holes or open regions emptied without the material. and one or more ribs may be formed.

The mesh (62) is a type of filter, which may have a sieve or mesh structure, and the size of the sieve opening may be appropriately set depending on the type and size of the foreign substances to be filtered and removed. The mesh (62) may be disposed below the knife (61) in the horizontal direction, and may have a circular or polygonal plate shape. The size of the mesh (62) may be the same as the open lower part of the guide (40) or may be larger than the open lower part of the guide (40).

Referring to Figure 2, the box (70) is for preventing external diffusion of dust, which may be disposed between the guide (40) and the hopper (80), and specifically, may be disposed so that an upper part of the box (70) is in close contact with the lower part of the guide (40) and a lower part of the box (70) is in close contact with an upper part of the hopper (80). The lower part of the box (70) may be disposed to surround the inlet portion of the hopper (80). The connection portion between the guide (40) and the box (70) and the connection portion between the box (70) and the hopper (80) may be sealed through sealing members (77, 78).

Specifically, the upper part of the box (70) is sealed with the guide (40) through the upper sealing member (77), and the lower part of the box (70) is sealed with the inlet of the hopper (80) through the lower sealing member (78), whereby it may be designed with a structure that the dust does not leak to the outside. The connection portion with the guide (40) in the upper part of the box (70) may be opened for inputting (passing) the raw materials and raising (passing) the cutter (60), and the connection portion with the inlet of the hopper (80) in the lower part of the box (70) may be opened for inputting (passing) the raw materials, and the like.

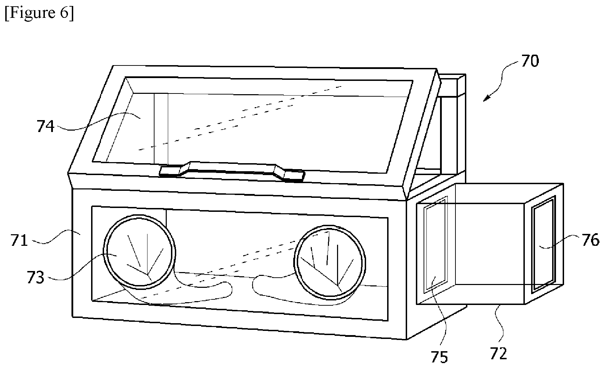

Referring to Figure 6, the box (70) may be composed of a main box (71), a scrap box (72), a glove (73), a main door (74), an inner door (75), an outer door (76), and the like. The box (70) may be manufactured in a sealed structure so that the dust does not spread to the outside. The box (70) may be made transparent so that the inside is visible. The box (70) may be a glove box mounted with a glove (73) to be capable of manual work. The box (70) may be composed of a main box (sealed main box) (71) and a scrap box (72).

The main box (71) may have an approximately hexahedral shape and may comprise an inclined structure at an upper part of the main box (71). A pair (two) of gloves (manual gloves) (73) may be mounted on the front of the main box (71) to enable manual work. A main door (sealed main door) (74) may be mounted on the upper part of the main box (71), and an inner door (sealed inner door) (75) for discharging scrap may be mounted on a side of the main box (71), where these doors (74, 75) may be sealed with the main box (71). If the scrap occurs within the main box (71), the scrap may be discharged after opening the inner door (75) installed on the side of the main box (71).

The scrap box (72) is for receiving, storing, and/or discharging raw material scrap, and may be disposed on the side of the main box (71) and connected to the inner door (75). The scrap box (72) may have an approximately hexahedral shape and may have a smaller size than that of the main box (71). An outer door (76) for discharging scrap may be mounted on the side of the scrap box (72).

The hopper (80) is a place where raw materials inside the bag (10) moved by the hanger (30) are input. The hopper (80) may be disposed below the rail (20). The inlet of the hopper (80) may be formed at the upper part of the hopper (80). Upon adjusting the height of the bag (10), the discharge part of the bag (10) may be separated from the hopper (80), and accordingly, there may be a problem that the active materials scatter. Therefore, upon adjusting the height of the bag (10), it is necessary to maintain the entry depth of the discharge part of the bag (10) into the hopper (80).

To solve the problem of active material scattering, an upper photo-electric sensor, and a lower photo-electric sensor, which are not shown, may be installed near the inlet of the hopper (80) in the vertical direction to sense the position of the end of the discharge part of the bag (10). The upper photo-electric sensor may be mounted on both sides of an upper part of the inlet of the hopper (80) in at least one pair, and sense the minimum (Min.) position of the end of the discharge part of the bag (10). The lower photo-electric sensor may be mounted on both sides of a lower part of the inlet of the hopper (80) in at least one pair, and sense the maximum (Max.) position of the end of the discharge part of the bag (10). By reflecting the sensing results of the two photo-electric sensors, the bag (10) may be lowered upon sensing the minimum (Min.) position, and the bag (10) may be raised upon sensing the maximum (Max.) position.

Conventionally, hopper custom input and finishing works were performed manually. Specifically, a worker confirms the input weight, and then finishes by grabbing the discharge part of the bag (10). To solve such a manual work problem, grippers which are not shown may grip the discharge part of the bag (10) in which the input of the raw materials into the hopper (80) has been completed to block the discharge of the raw materials. The grippers are installed on both sides near the inlet of the hopper (80), and the respective grippers comprise rods capable of reciprocating inward in the horizontal direction, wherein their installation heights are different, so that they may grip different portions of the bag (10).

The upper gripper and the lower gripper may be disposed to face each other on opposite sides, and the upper rod and the lower rod may move inward toward the center to be almost close to each other at the center. As it is finished by crushing and deforming the discharge part with pressurization of both grippers, the remaining raw materials may be prevented from falling to the floor. For effective finishing (sealing) of the discharge part, the lower end of the upper gripper and the upper end of the lower gripper may be disposed to be positioned at the same height. In this way, when the bag (10) reaches a certain weight, the active material discharge may be blocked and finished using the grippers.

According to another aspect, by adding a clamping unit for finishing the inner packaging material using a forward/backward stroke method, which is not shown, the lower part of the empty bag (10), in which the raw material input into the hopper (80) has been completed, is finished, whereby the discharge of raw materials may be blocked. The clamping unit may be composed of one pair, and may be installed on both sides near the inlet of the hopper (80) in the horizontal direction. The pair of clamping units may be symmetrically disposed around the inlet of the hopper (80) on the same height. The pair of clamping units may be disposed to face each other on opposite sides, for example, at an interval of 180 degrees.

Each clamping unit may comprise a cylinder, a rod installed on the cylinder to be movable forward and backward, and a pusher unit connected to the rod and pressurizing the bag (10). The cylinder may be, for example, an air cylinder. The rod may consist of one or multiple rods. The pusher unit may be, for example, a quadrangular flat plate. A pair of pusher units are disposed to face each other, and each moves forward inward toward the center to pressurize both sides of the lower part of the inner packaging material of the bag (10), thereby being capable of plastically deforming and finishing the bag (10). In this way, it is possible to prevent the remaining amount of the raw materials from falling by plastically deforming the inner packaging material with a finishing clamp of a dumping hopper post unit. In addition, the man-hours may be reduced by automating the bag finishing and empty bag recovery processes.

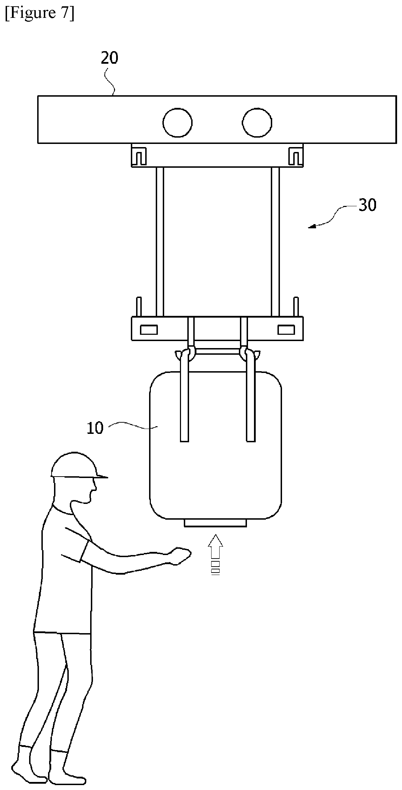

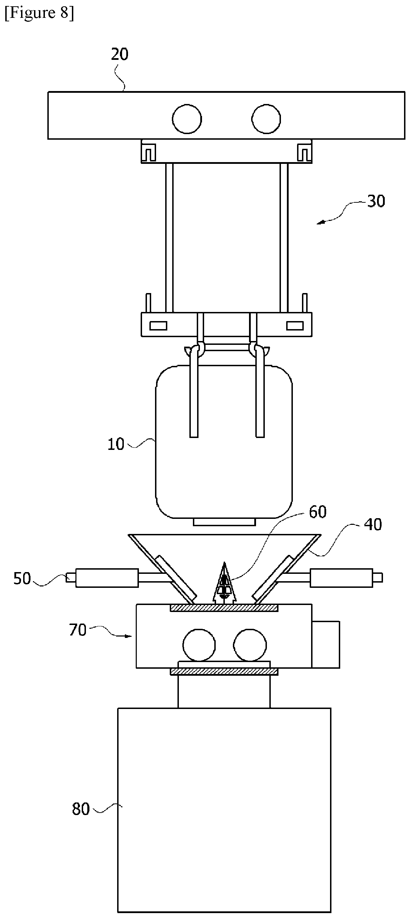

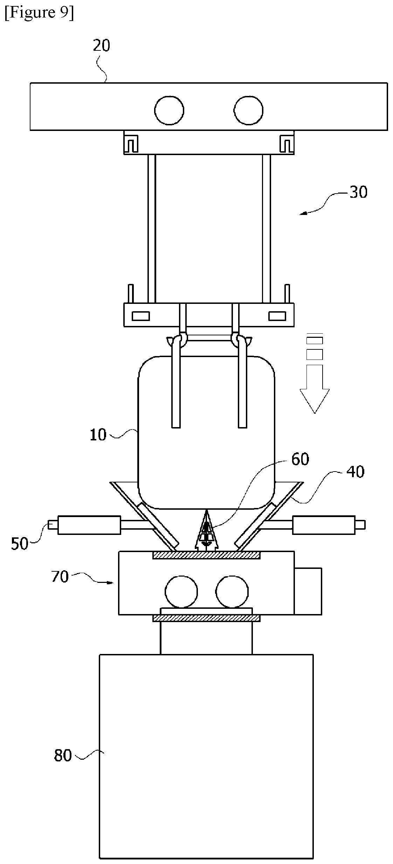

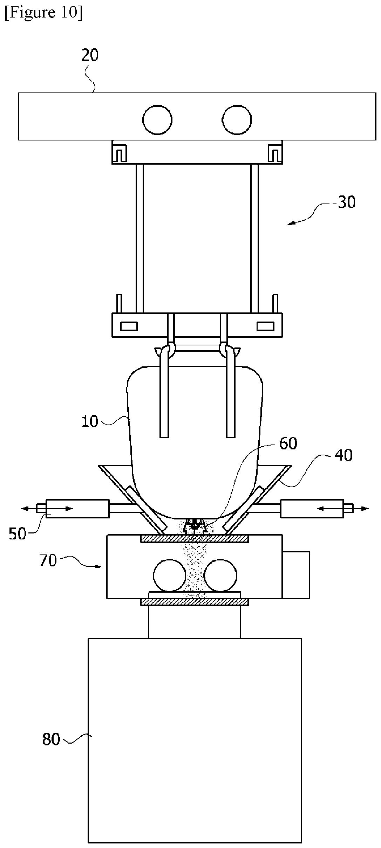

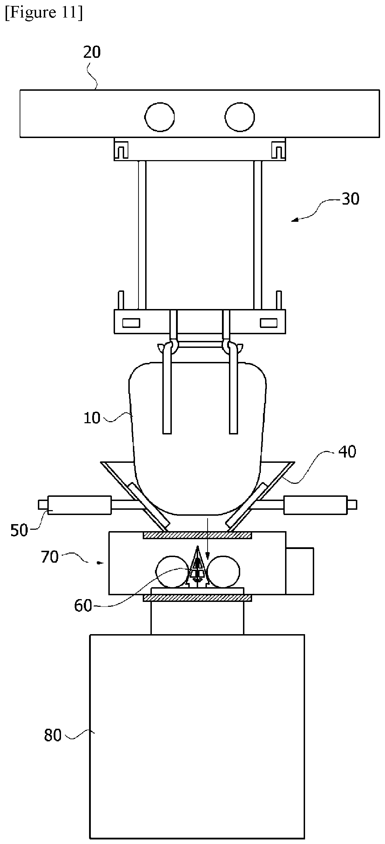

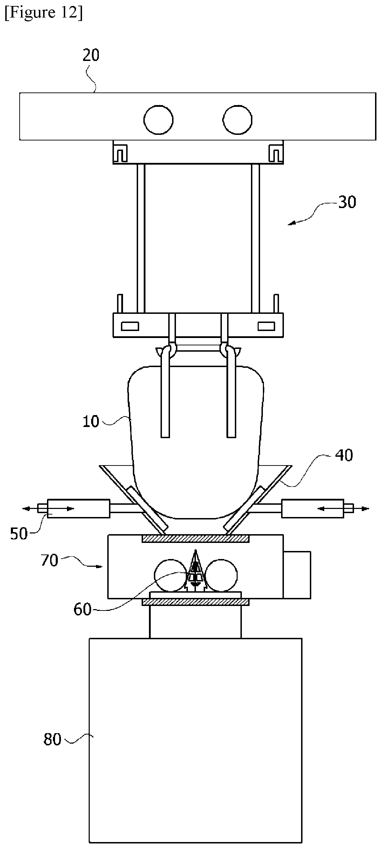

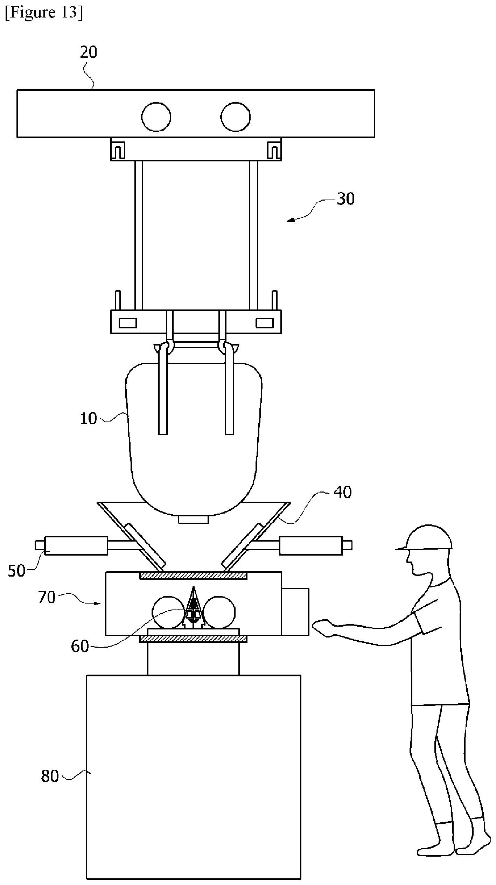

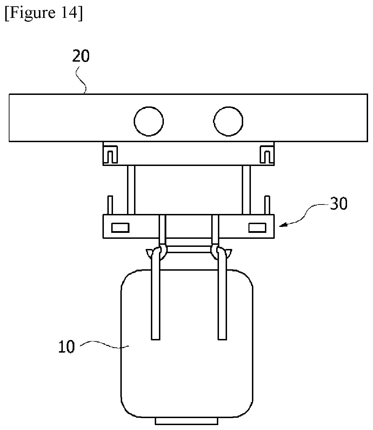

Referring to Figures 7 to 14, the operation processes of the raw material input automation device according to the present disclosure are as follows. Opening the lower part of the bag (10) (worker) (Figure 7) → Transferring the bag (10) to the hopper (80) by the hanger (30) (Figure 8) -> Lowering and cutting the bag (10) by lowering the hanger (30) (Figure 9) -> Discharge of raw materials by pusher (50) operation (Figure 10) -> Lowering of the knife (61) by the air cylinder (Figure 11) → Removal of the remaining amount by pusher (50) operation (Figure 12) → Binding of the bag discharge part (worker) (Figure 13) → Return of the empty bag (10) by the hanger (30) (Figure 14). Only one rail (20) may be installed, and the pluralities of hangers (30), guides (40), pushers (50), cutters (60), boxes (70), hoppers (80), and the like may be installed. The bag (10) may be hold on a holder.

Referring to Figure 7, a worker opens the lower part of the bag (10). This work is a manual work by the worker. The bag (10) may be composed of a dual structure of an outer packaging material and an inner packaging material, and may be equipped with an openable and closable discharge part at the lower part of the outer packaging material. Specifically, the worker may disjoint and open the discharge part of the outer packaging material of the bag (10) hanging on the hanger (30).

Referring to Figure 8, the bag (10) in which the lower part is opened is transferred toward the hopper (80). This operation is an automatic process performed by the hanger (30). The bag (10) hanging on the hanger (30) may be horizontally moved to the designated hopper (80) position along the rail (20) by the OHT. The cutter (60) may be raised before, during, or after the transfer of the bag (10) and disposed in the guide (40) in advance.

Referring to Figure 9, the bag (10) is lowered and cut. This operation is an automatic process performed by the hanger (30) and the cutter (60). While the bag (10) is lowered by the hanger (30) to be entered into the guide (40), and then begins to contact the cutter (60) previously disposed in the guide (40), the lower part of the bag (10) is cut by the sharp knife (61), whereby the raw materials may be discharged. At this time, the bag (10) may be lowered so that the knife (61) is entered to the inside of the bag (10) completely (entirely) or partially.

Referring to Figure 10, the pusher (50) operates to smoothly discharge the raw materials. This operation is an automatic process performed by the pusher (50). As both pushers (50) repeatedly tap the bag (10) simultaneously, the raw materials may be smoothly discharged and the clumping phenomenon of the raw materials may also be prevented. The pushers (50) may operate continuously for the entire discharge time when the raw materials are discharged, or may operate intermittently at regular time intervals.

Referring to Figure 11, the cutter (60) or the knife (61) descends. This operation is an automatic process performed by the air cylinder. The lowering time point of the cutter (60) may be a time point when the discharge of the raw materials is almost completed, or may be any time point while the raw materials are discharged.

Referring to Figure 12, the pusher (50) operates to remove the remaining amount of the raw materials. This operation is an automatic process performed by the pusher (50). Both pushers (50) repeatedly tap the bag (10) simultaneously, so that trace amounts of raw materials remaining in the bag (10) may be completely discharged.

Referring to Figure 13, the worker binds the discharge part of the bag (10). This work is a manual work by the worker. Specifically, the worker may bind and close the discharge part of the bag (10) in which the discharge of the raw materials has been completed. In addition, this finishing work of the bag (10) may also be automatically performed by the gripper or clamping unit, as described above.

Referring to Figure 14, the empty bag is returned. This operation is an automatic process performed by the hanger (30). Specifically, the empty bag (10) that is empty after the discharge of the raw materials has been completed may be transferred to the transportation location by the hanger (30).

As described above, the automatic mounting/input device using the knife and the pusher according to the present disclosure uses the self-weight of the flecon bag to seat the lower part of the flecon bag on the pyramid-shaped knife, so that the lower part can be cut, and the internal pulverulent body is tapped with the pusher, so that it can be smoothly discharged.

### [Explanation of Reference Numerals]

10: bag, 11: sling bar, 20: rail, 30: hanger, 31: upper hanger, 32: lower hanger, 33: wire, 34: hook, 35: location hole, 36: location pin, 37: load cell, 40: guide, 50: pusher, 51: cylinder, 52: rod, 53: link, 54: tilting member, 60: cutter, 61: knife, 62: mesh, 70: box, 71: main box, 72: scrap box, 73: globe, 74: main door, 75: inner door, 76: outer door, 77, 78: sealing member, 80: hopper

## Claims

1. A raw material input automation device comprising:
a hopper configured to receive raw materials stored inside a bag;
a cutter disposed above an inlet of the hopper and configured to cut a lower part of the bag;
a box disposed above the hopper and configured to prevent external diffusion of dust;
a guide disposed above the box and configured to guide entry of the bag; and
at least one pusher installed on the guide and configured to tap the bag by variable tilting to promote a discharge of the raw materials from the bag into the hopper.

2. The raw material input automation device according to claim 1, wherein
the cutter is configured to be raised or lowered by an air cylinder.

3. The raw material input automation device according to claim 1, wherein
the cutter includes a pyramid-shaped knife and a mesh disposed below the pyramid-shaped knife to filter foreign substances.

4. The raw material input automation device according to claim 1, wherein
an upper part of the box is sealed with the guide, and a lower part of the box is sealed with the inlet of the hopper.

5. The raw material input automation device according to claim 1, wherein
the box is transparent and has a sealed structure.

6. The raw material input automation device according to claim 1, wherein
the box is a glove box mounted with a glove.

7. The raw material input automation device according to claim 1, wherein
the box includes a main box equipped with a glove and a door for discharging scrap; and a scrap box disposed on a side of the main box.

8. The raw material input automation device according to claim 1, wherein
the guide has a tapered structure whose width narrows downward, and wherein an inclination angle and a size of the guide are set such that sides of the bag contact an inner surface of the guide first.

9. The raw material input automation device according to claim 1, wherein
the at least one pusher includes a pair of pushers, each of the pair of pushers including a cylinder disposed outside the guide, a rod installed on the cylinder to be movable forward and backward along a horizontal direction, a link connected to the rod, and a tilting member that is connected to the link, the tilting member being disposed inside the guide and variably tiltable by a forward movement and a backward movement of the link, with a lower end of the tilting member being fixed to the guide to be rotated.

10. The raw material input automation device according to claim 1, further comprising:
a rail disposed at a height in a horizontal direction; and
a hanger mounted on the rail and configured to reciprocate in the horizontal direction, the hanger configured to reciprocate the bag mounted at a lower end of the hanger in a vertical direction.

11. The raw material input automation device according to claim 10, wherein
the hanger includes an upper hanger mounted on the rail, a lower hanger disposed below the upper hanger, a wire installed between the upper hanger and the lower hanger, and at least one hook mounted on the lower hanger to hang the bag.

12. The raw material input automation device according to claim 11, wherein
a location hole is positioned on any one of the upper hanger and the lower hanger, and a location pin inserted into the location hole is positioned on the other one of the upper hanger and the lower hanger that does not include the location hole.

13. The raw material input automation device according to claim 11, wherein
the at least one hook includes a pair of hooks, wherein the pair of hooks is configured to grip a string-shaped sling bar of the bag at two points, and wherein the pair of hooks has a gap so as to minimize a height of the bag.

14. The raw material input automation device according to claim 11, wherein
the hanger further comprises load cells installed on both left and right sides of the lower hanger.

15. The raw material input automation device according to claim 14, wherein
the hanger is configured to correct a tilt of the bag by sensing a weight deviation on the load cells on both left and right sides of the lower hanger, the hanger being configured to adjust the height of the bag based on a weight change sensed by the load cells on both left and right sides of the lower hanger.
